# EUROPÄISCHE PATENTSCHRIFT

(11) **EP 1 736 602 B1**
(45) Veröffentlichungstag und Bekanntmachung des Hinweises auf die Patenterteilung: **19.03.2008**
(21) Anmeldenummer: 05105649.7
(22) Anmeldetag: 24.06.2005
(51) Int. Cl.: E01B 29/46

(54) **Schweissmaschine zum Verschweissen von Schienen eines Gleises**
A rail welding device
Machine à tendre des rails de chemin de fer pour les souder

(43) Veröffentlichungstag der Anmeldung: 27.12.2006
(73) Patentinhaber: Franz Plasser Bahnbaumaschinen-Industriegesellschaft m.b.H., 1010 Wien (AT)
(72) Erfinder: Lichtberger, Bernhard, Dr., 4230 Pregarten (AT); Theurer, Josef, 1010 Wien (AT)

(56) Entgegenhaltungen:
- FR-A- 2 010 865
- US-A- 4 929 816
- US-A- 5 099 097
- US-A1- 2003 141 283
- US-B1- 6 396 020

## Beschreibung

Die Erfindung betrifft eine Schweißmaschine gemäß den im Oberbegriff des Hauptanspruches angeführten Merkmalen.

Eine derartige Schweißmaschine ist durch US 5 136 140, GB 0 326 794 oder US 4 929 816 bekannt und dient zum Verschweißen von Schienen eines Gleises. Der Schweißvorgang wird durch eine Schienenziehvorrichtung unterstützt, die die eingespannten Schienenenden mit großer Kraft auf einen für das Schweißen erforderlichen Abstand zueinander zieht. Die Schienenziehvorrichtung ist pendelnd am Maschinenrahmen aufgehängt und für den Arbeitseinsatz zur Absenkung auf die Schienen höhenverstellbar.

Die Aufgabe der vorliegenden Erfindung liegt nun in der Schaffung einer Maschine der eingangs genannten Art, mit der eine rasche und präzise Positionierung der Schienenziehvorrichtung möglich ist.

Diese Aufgabe der Erfindung wird mit einer Maschine der gattungsgemäßen Art durch die im Kennzeichen des Anspruches 1 angeführten Merkmale gelöst.

Mit einer derartigen Zwangsführung der Schienenziehvorrichtung ist deren Lage unabhängig vom Maschinenrahmen präzise einstellbar. Damit kann die Schienenziehvorrichtung in einem Gleisbogen des Gleises parallel zu dessen Querneigung positioniert und die folgende Zentrierung der zu verschweißenden Schienenenden wesentlich verbessert werden. Außerdem ist durch die Zwangsführung ausgeschlossen, dass die - gemäß dem Stand der Technik pendelnd aufgehängte - Schienenziehvorrichtung im Gleisbogen infolge der Gleisquerneigung automatisch in eine lotrechte Lage übergeht.

Weitere Vorteile der Erfindung ergeben sich aus der Zeichnungsbeschreibung. Im folgenden wird die Erfindung anhand eines in der Zeichnung dargestellten Ausführungsbeispieles näher beschrieben. Es zeigen

Fig. 1 eine Seitenansicht einer Schweißmaschine mit einer Schienenziehvorrichtung,

Fig. 2 , 3 eine vergrößerte teilweise Draufsicht bzw. eine Seitenansicht der Schienenziehvorrichtung,

Fig. 4 eine Ansicht einer Führung der Schienenziehvorrichtung in Schienenlängsrichtung und

Fig. 5 eine schematische Draufsicht auf eine weitere Ausführungsform der Schienenziehvorrichtung.

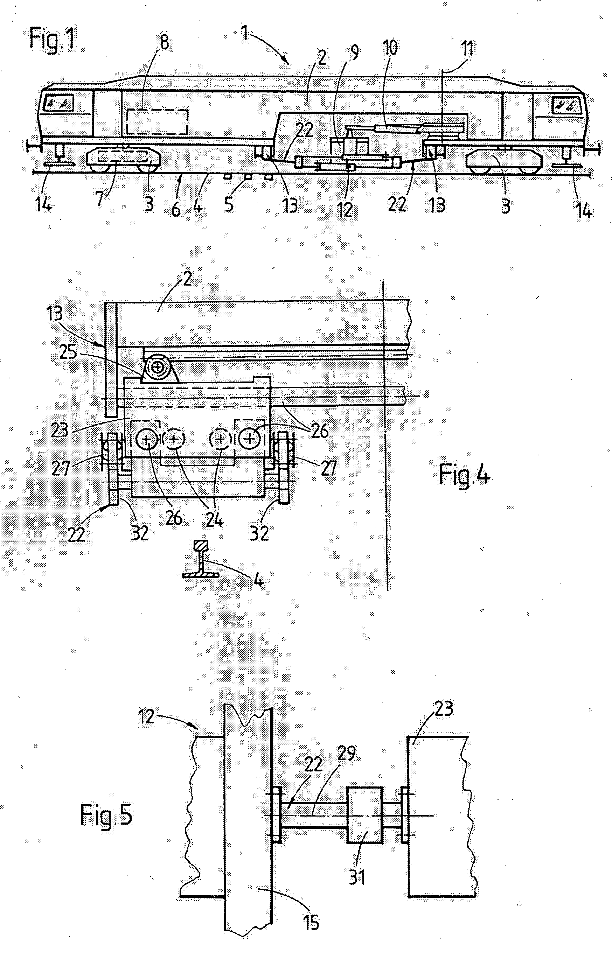

Eine in Fig. 1 ersichtliche Schweißmaschine 1 mit einem brückenförmigen Maschinenrahmen 2 ist durch endseitig angeordnete Schienenfahrwerke 3 auf einem Schienen 4 und Schwellen 5 aufweisenden Gleis 6 mit Hilfe eines Fahrantriebes 7 verfahrbar. Eine zentrale Energieeinheit 8 mit einem Antriebsmotor, Hydraulikpumpen und einem Generator sorgt für die erforderliche Energielieferung. Mittig zwischen den beiden Schienenfahrwerken 3 ist ein elektrisches Abbrennstumpf-Schweißaggregat 9 angeordnet, das mit einem teleskopisch verlänger- und höhenverstellbaren Hubarm 10 verbunden ist, der seinerseits am Maschinenrahmen 2 befestigt und um eine vertikale Achse 11 verdrehbar ist. Unterhalb des Abbrennstumpf-Schweißaggregates 9 ist eine Schienenziehvorrichtung 12 angeordnet, die in mit dem Maschinenrahmen 2 verbundenen Führungen 13 gelagert ist. Im Bereich jedes der beiden Schienenfahrwerke 3 befinden sich zwei in Maschinenquerrichtung voneinander distanzierte Hubstempel 14, die unter Auflage auf die Schwellenoberseite zur Anhebung des Maschinenrahmens 2 ausgebildet sind.

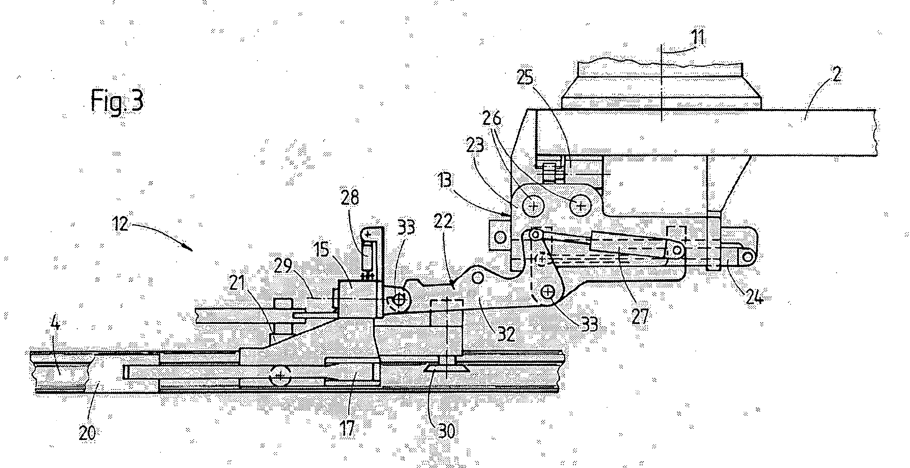

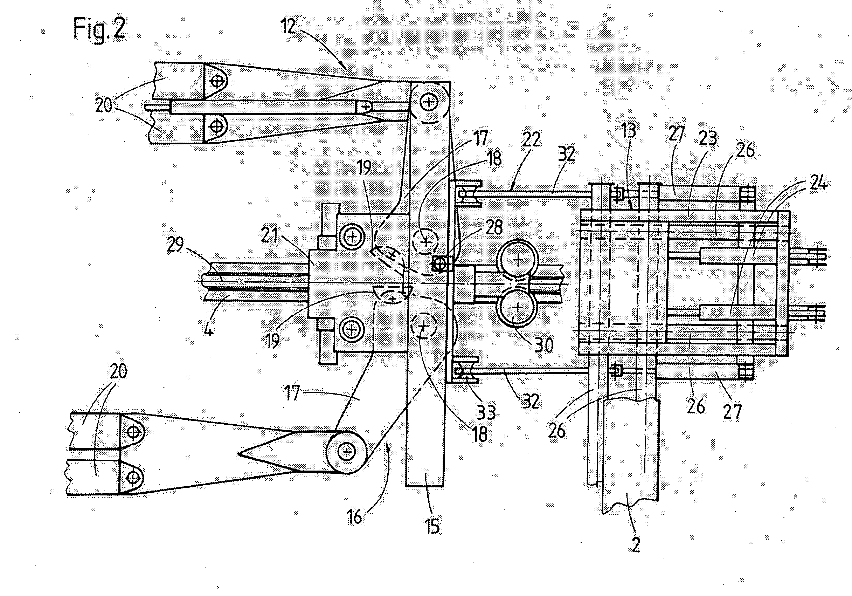

Die in Fig. 2 und 3 ersichtliche, im wesentlichen symmetrisch ausgebildete Schienenziehvorrichtung 12 zum Längsverschieben der Schienen 4 ist der Einfachheit halber nur zur Hälfte dargestellt. Die Schienenziehvorrichtung 12 weist zwei quer zur Maschinen- bzw. Schienenlängsrichtung verlaufende, voneinander distanzierte Querjoche 15 auf. An diesen sind jeweils ein Klemmzangen-Paar 16 bildende Klemmzangen 17 angeordnet, die jeweils um eine vertikale bzw. senkrecht zur Gleisebene verlaufende Schwenkachse 18 verschwenkbar mit dem Querjoch 15 verbunden sind. Die in der Zeichnung (Fig. 2) obere Klemmzange 17 ist in geöffneter Stellung ersichtlich, während die untere Klemmzange 17 in geschlossener Stellung dargestellt ist. Jede zur Anlage an den Schienensteg verschwenkbare Klemmbacken 19 aufweisende Klemmzange 17 ist im der Schwenkachse 18 gegenüberliegenden Endbereich gelenkig mit zwei Hydraulikantrieben 20 verbunden. Die Querjoche 15 sind an der einander zugewandten Seite jeweils mit einer Zentriervorrichtung 21 verbunden, mit der die Schienen 4 für den Schweißvorgang zentrierbar sind (die Zentriervorrichtung 21 ist in US 5 136 140 näher beschrieben). Die Schienenziehvorrichtung 12 ist im Bereich ihrer beiden Querjoche 15 jeweils durch eine Kupplungsvorrichtung 22 mit der Führung 13 verbunden. Die Kupplungsvorrichtung besteht aus zwei in Maschinenquerrichtung voneinander distanzierten Trägern 32, an deren Enden sich Anlenkstellen 33 befinden.

Wie auch in Fig. 4 zu sehen ist, weist jede Führung 13 einen Führungsschlitten 23 auf, an dem die Kupplungsvorrichtung 22 angelenkt ist. Dieser Führungsschlitten 23 ist durch Längsverschiebeantriebe 24 und einen Querverschiebeantrieb 25 auf Führungssäulen 26 in bzw. quer zur Maschinenlängsrichtung verschiebbar ausgebildet. Durch weitere Antriebe 27 kann die Kupplungsvorrichtung 22 in den Anlenkstellen 33 verschwenkt werden. Dadurch erfolgt eine Höhenverstellung der Schienenziehvorrichtung 12. An der Kupplungsvorrichtung 22 ist weiters ein Kippantrieb 28 vorgesehen, der ein Verschwenken der Schienenziehvorrichtung 12 um eine in Maschinenlängsrichtung verlaufende Achse 29 ermöglicht.

Im folgenden wird der Arbeitseinsatz der Schienenziehvorrichtung 12 kurz beschrieben. Nachdem die Schweißmaschine 1 an den Einsatzort gefahren wurde, wird die Schienenziehvorrichtung 12 bei geöffneten Klemmzangen 17 mittels der Antriebe 27 abgesenkt. Dabei sind die Längsverschiebeantriebe 24 schwimmend geschaltet, um eine auftretende Verschiebung des Führungsschlittens 23 auszugleichen. Durch Beaufschlagen der Längs- und Querverschiebeantriebe 24, 25 wird die Schienenziehvorrichtung 12 exakt positioniert. Eine eventuelle Schräglage der Schienen 4 im Gleisbogen kann durch Betätigung des Kippantriebes 28 ausgeglichen werden. Um das Aufnehmen der Schienen 4 zu erleichtern, weist die Schienenziehvorrichtung 12 zusätzliche Hebezangen 30 auf. Mithilfe der Zentriervorrichtung 21 können die Schienen 4 genau fluchtend ausgerichtet werden. Nun erfolgt das Schliessen der Klemmzangen 17 und durch Beaufschlagen der Hydraulikantriebe 20 werden die Schienen 4 auf den zum Schweissen erforderlichen Abstand zueinander gezogen, um anschließend durch das Schweissaggregat 9 verschweißt zu werden.

Eine in Fig. 5 schematisch dargestellte Variante weist einen höhen-, quer- und längsverstellbaren Führungsschlitten 23 auf, der über eine starre Kupplungsvorrichtung 22 mit der Schienenziehvorrichtung 12 verbunden ist. Um diese um die Achse 29 zu verschwenken, ist in die Kupplungsvorrichtung 22 ein Drehantrieb 31 integriert.

## Patentansprüche

1. Schweißmaschine (1) zum Verschweißen von Schienen (4) eines Gleises (6), mit einem auf Schienenfahrwerken (3) verfahrbaren Maschinenrahmen (2), einem Schweißaggregat (9) und einer Schienenziehvorrichtung (12) zum Erfassen der miteinander zu verschweißenden Schienen (4), mit auf einem normal zur Schienenlängsrichtung verlaufenden Querjoch (15) verschwenkbar gelagerten, jeweils ein in Schienenlängsrichtung voneinander distanziertes Paar (16) bildenden Klemmzangen (17) mit zur Anlage an die Schiene (4) vorgesehenen Klemmbacken (19), wobei die beiden parallel zueinander verlaufende Schwenkachsen (18) aufweisenden Klemmzangen-Paare (16) durch Hydraulikantriebe (20) miteinander verbunden sind, und die Schienenziehvorrichtung (12) durch einen Antrieb (27) höhenverstellbar mit dem Maschinenrahmen (2) verbunden ist, **gekennzeichnet durch folgende Merkmale:**
a) die Schienenziehvorrichtung (12) ist im Bereich ihrer beiden Querjoche (15) jeweils **durch** eine Kupplungsvorrichtung (22) mit dem Maschinenrahmen (2) verbunden,
b) jede Kupplungsvorrichtung (22) ist **durch** Längsverschiebe- und Querverschiebeantriebe (24, 25) für eine Verschiebung in und quer zur Maschinenlängsrichtung relativ zum Maschinenrahmen (2) ausgebildet,
c) die Kupplungsvorrichtung (22) ist mit einem Kippantrieb (28) für eine Kippbewegung der Schienenziehvorrichtung (12) um eine in Maschinenlängsrichtung verlaufende Achse (29) ist ausgestattet.

2. Schweißmaschine (1) nach Anspruch 1, **dadurch gekennzeichnet, dass** die Kupplungsvorrichtung (22) mit einem relativ zum Maschinenrahmen in Maschinenquerrichtung verschiebbar gelagerten Führungsschlitten (23) verbunden ist, an dem zumindest ein Längs- und ein Querverschiebeantrieb (24, 25) sowie ein Antrieb (27) zur Höhenverstellung der Schienenziehvorrichtung (12) angeordnet sind.

3. Schweißmaschine (1) nach Anspruch 1 oder 2, **dadurch gekennzeichnet, dass** die Kupplungsvorrichtung (22) zwei in Maschinenquerrichtung voneinander distanzierte Träger (32), an deren Enden Anlenkstellen (33) angeordnet sind, aufweist.

4. Schweißmaschine (1) nach Anspruch 1 oder 2, **dadurch gekennzeichnet, dass** der Kippantrieb (28) als Drehantrieb (31) ausgebildet ist.

## Claims

1. A welding machine (1) for welding rails (4) of a track (6), including a machine frame (2) mobile on on-track undercarriages (3), a welding unit (9) and a rail pulling device (12) for gripping the rails (4) to be welded to one another, comprising clamping members (17) pivotably mounted on a transverse beam (15) extending perpendicularly to the longitudinal direction of the rails, said clamping members (17) forming respective pairs (16), spaced from one another in the longitudinal direction of the rail, and having clamping jaws (19) provided for application to the rail (4), wherein the two clamping member pairs (16), having pivot axes (18) extending parallel to one another, are connected to one another by means of hydraulic drives (20), and the rail pulling device (12) is connected to the machine frame (2) for vertical adjustment by a drive (27), **characterized by** the following features:
a) the rail pulling device (12) is connected, in the region of its two transverse beams (15), to the machine frame (2) by means of a respective coupling device (22),
b) each coupling device (22) is designed for displacement in the longitudinal direction of the machine, and transversely to the longitudinal direction of the machine, relative to the machine frame (2) by means of longitudinal and transverse displacement drives (24, 25),
c) the coupling device (22) is equipped with a tilting drive (28) for a tilting motion of the rail pulling device (12) about an axis (29) extending in the longitudinal direction of the machine.

2. A welding machine (1) according to claim 1, **characterized in that** the coupling device (22) is connected to a guiding carriage (23), mounted for displacement in the transverse direction of the machine relative to the machine frame, on which are arranged at least one longitudinal and one transverse displacement drive (24, 25) as well as a drive (27) for vertical adjustment of the rail pulling device (12).

3. A welding machine (1) according to claim 1 or 2, **characterized in that** the coupling device (22) comprises two girders (32), spaced from one another in the transverse direction of the machine, at the ends of which articulation points (33) are arranged.

4. A welding machine (1) according to claim 1 or 2, **characterized in that** the tilting drive (28) is designed as a rotation drive (31).

## Revendications

1. Machine à souder (1) pour souder des rails (4) d'une voie ferrée (6), comprenant un cadre de machine (2) déplaçable sur des bogies pour rails (3), une unité de soudage (9) et un dispositif de traction des rails (12) pour saisir les rails (4) à souder ensemble, comprenant des pinces de serrage (17) montées de manière pivotante sur un joug transversal (15) s'étendant perpendiculairement à la direction longitudinale des rails, et qui forment à chaque fois une paire (16) espacée l'une de l'autre dans la direction longitudinale des rails, avec des mâchoires de serrage (19) prévues pour s'appliquer contre le rail (4), les deux paires de pinces de serrage (16) présentant des axes de pivotement (18) s'étendant parallèlement l'un à l'autre étant connectées l'une à l'autre par des entraînements hydrauliques (20), et le dispositif de traction des rails (12) étant connecté de manière réglable en hauteur au cadre de machine (2) par un entraînement (27), **caractérisée en ce que** :
a) le dispositif de traction des rails (12) est connecté au cadre de machine (2) dans la région de ses deux jougs transversaux (15) à chaque fois par un dispositif d'accouplement (22),
b) chaque dispositif d'accouplement (22) est réalisé par des entraînements de coulissement longitudinal et transversal (24, 25) pour un coulissement dans et transversalement à la direction longitudinale de la machine par rapport au cadre de machine (2),
c) le dispositif d'accouplement (22) est équipé avec un entraînement de basculement (28) pour un mouvement de basculement du dispositif de traction des rails (12) autour d'un axe (29) s'étendant dans la direction longitudinale de la machine.

2. Machine à souder (1) selon la revendication 1, **caractérisée en ce que** le dispositif d'accouplement (22) est connecté à un chariot de guidage (23) monté de manière coulissante par rapport au cadre de machine dans la direction transversale de la machine, sur lequel sont disposés au moins un entraînement de coulissement longitudinal et transversal (24, 25) ainsi qu'un entraînement (27) pour le réglage en hauteur du dispositif de traction des rails (12).

3. Machine à souder (1) selon la revendication 1 ou 2, **caractérisée en ce que** le dispositif d'accouplement (22) présente deux supports (32) espacés l'un de l'autre dans la direction transversale de la machine, aux extrémités desquels sont disposés des points d'articulation (33).

4. Machine à souder (1) selon la revendication 1 ou 2, **caractérisée en ce que** l'entraînement de basculement (28) est réalisé sous forme d'entraînement rotatif (31).
